# EUROPEAN PATENT APPLICATION

(11) **EP 2 485 201 A1**
(43) Date of publication of application: **08.08.2012**
(21) Application number: 11153520.9
(22) Date of filing: 07.02.2011
(51) Int. Cl.: G08B 25/10, G06Q 10/00

(54) **Telematic risk management system**

(71) Applicant: F.I.M. Legno S.p.A., 25030 Adro (BS) (IT)
(72) Inventor: Mombelloni, Carlo, 25030 Paratico Brescia (IT); Massi, Marco, 21040 Venegono Inferiore Varese (IT)
(74) Representative: Grünecker, Kinkeldey, Stockmair & Schwanhäusser

(57) **Abstract**

The present invention relates to a telematic risk management system for shipment in the transportation sector to prevent and reduce likelihood and severity of accidents. The system comprises at least one fixed control centre (20) and at least one telematic surveillance unit (10) comprising a wireless communication module (11) for communicating with said at least one control centre (20). The telematic surveillance unit (10) is operable to communicate with the control centre via a set of wireless protocols, and may further be provided with a global positioning system. In case of maltreatment, incorrect storage, handling misuse exceeding preset parameters and/or packaging violation and or unauthorized device removal, the telematic surveillance unit may send a warning message to the control centre and may locally activate an optical warning signal. The control center is able to contact and check the telematic surveillance unit's status and position at any instance.

## Description

The present invention relates to a risk management system, more particularly to a telematic risk management system suitable for any kind of shipment in the transportation sector to prevent and reduce likelihood and severity of accidents.

The telematic risk management system according to the present invention provides data collected through several sensors and it is able to send these data to one or more control centers. In the transportation sector, the overarching risk management objective has been to prevent and reduce likelihood and severity of accidents.

For instance from US 2007/0008410 A1 anti theft systems are known which have been in use for many years. This systems are configure as a traditional security system: a unit (master) collects the information from a series of sensors installed in combination (e.g. magnetic sensors, etc.). All telematic alarm systems and the GSM according to this document are working based on the same principle, as well as all networking systems mentioned have a similar operating principle, in practice a simple access point for sensors. An access point (AP) is a device that allows mobile users to connect to a wireless network. The access point, physically connected to a wired net (or wirelessly to another access point), receives and sends a radio signal to the user through antennas and transponder devices, allowing the connection in the form of radio transmissions.

Furthermore, US 2010/0079256 A1 discloses a long-range system that communicates locally with short range devices. It refers only to vehicles and to a transponder where sensors detect measurement values generically. This known technique is the same one used in wireless thermometers. The transponder is a device that can be used in several ways: As an automatic device that receives, amplifies and resends a signal using a different frequency; as an automatic device that sends a preset message in response to a preset signal received; and as a receiver-transmitter (transceiver) that generates a signal in response to a specific question.

Moreover, from US 7,737,840 B2 a monitoring system for containers is known, which requires a unit installed on the ship, and is not able to monitor the packaging integrity and handling.

US 2009/0102660 A1 refers to a track and trace system with a tag that communicates information using electromagnetic waves, commonly called RFID tags. In particular, RFID (Radio Frequency Identification) is a technology for the automatic identification of objects, animals or people, AIDC (Automatic Identifying and Data Capture) based on the possibility to store and remotely access these data, using electronic devices (called tags or transponders), that are able to reply, communicating the information contained therein when asked.

Finally, US 2007/0291690 A1 refers to a wireless LAN "ad hoc", with low power absorption, a conventional wireless network for monitoring objects inside containers.

However, where expensive and hazardous materials' shipments are involved, this extends to spill prevention and mitigating the consequences when a release of these hazardous materials occurs.

Transportation risk and preventing management should explicitly consider security threat and vulnerability, and integrate preventing strategy and security considerations into the overall framework for addressing natural and man-made disasters, be they accidental or planned. The increasing freight activities and demands for "just-in-time" delivery of goods make it relevant to develop a framework for carefully assessing the impact of an accident on commercial goods' transport or to apply an existing risk model in commercial goods transport. Such a model could be used to support routing decisions and identification of measures needed to reduce the occurrence of an accident and minimize its negative impacts, such as increased transportation system delay, increased transportation cost, and others.

Furthermore, moisture and humidity in most cases are the cause of corrosion of cargo during shipment. Corrosion takes place when cargo is shipped between different climate zones, e.g. across the equator. Generally it is assumed that there will be no damage to the cargo if the relative humidity is less than 60 to 70%.

It is known that the use of moisture barrier bags protects metal from corrosion and rust. Moisture barrier bags, for instance foil bags such as aluminium foil bags or bags made from plastics, such as polyester, are one of the most effective packaging solutions on the market today to protect all sorts of goods against corrosive damage caused by humidity, moisture, oxygen, salt spray, aromas, grease and other airborne contaminants. Products bagged and sealed in properly controlled production environments will remain protected as long as the correct moisture barrier materials remain intact.

Every year millions of dollars are lost due to corrosion and rusting of material and cargo during transportation and shipment. In particular, metal cargoes reach the destination rusted or oxidized due to moisture and humidity in the atmosphere. Damages caused by water are of course also a problem an issue for other materials than metals.

One of the major causes of corrosion is existence of moisture and humidity. During transportation of goods presence of humidity takes place because of temperature differences occurring during the transport process.

Changes in temperature may be due to several reasons. A cargo is subjected to considerable temperature variations, when being loaded in a cool atmosphere and then being shipped between different climate zones, e. g. across the equator, or when a container cools down during the night after being moved during a hot day in the sun. A temperature gradient may also occur due to differences in temperature between different parts of cargo.

The temperature has a significant impact on the humidity present within a gas, in particular air.

Often the notion of air holding water vapour is presented to describe the concept of relative humidity. This, however, is a misconception. Air is a mixture of gases (nitrogen, oxygen, argon, water vapour, and other gases) and as such the constituents of the mixture simply act as a transporter of water vapour but are not a holder of it.

Humidity is wholly understood in terms of the physical properties of water and thus is unrelated to the concept of air holding water. In fact, an air-less volume can contain water vapour and therefore the humidity of this volume can be readily determined. In the present context the word saturation refers to the state of water vapour, not the solubility of one material in another.

The relative humidity of an air-water mixture is defined as the ratio of the partial pressure of water vapour in the mixture to the saturated vapour pressure of water at a particular temperature. Relative humidity (RH) is normally expressed as a percentage. Totally dry air has RH of 0% and maximum humid air has RH of 100%. Generally, it can be assumed that there will be no damage to a cargo if the RH is less than 60 to 70%.

The relative humidity of an air-water system is dependent not only on the temperature but also on the absolute pressure of the system of interest. There is a maximum amount of moisture that is present in a gaseous state within air at a particular temperature and pressure. If the level of moisture is increased beyond this level, its increased level will condense as a fog of tiny droplets which will either float in the surrounding level or settle as dew on nearby cold surfaces.

Thus, when warm air cools down it becomes more humid and if there is considerable drop in temperature, condensation will occur which can lead to corrosion of metallic goods.

In order to protect the material from corrosion and rust, it is therefore necessary to ensure that the cargo is properly protected by using a moisture barrier packaging material so that RH of the air is not more than about 70%.

There exist several concepts to protect materials against moisture damage. For instance, the environment of a metal product can be controlled by packing the same in moisture barrier bags, for instance bags made from polyester. Once the material is enclosed in the sealed bag, little moisture can penetrate inside the bag which thus protects the material.

The moisture barrier property of the bags depends on the type of material used. In other words, the chemical composition of the foils used for manufacturing the bag and its thickness will be important criteria to the control the level of moisture. Keeping the cargo inside moisture barrier bags will provide protection to the packed material from corrosion due to humidity. However, apart from humidity, there are several other chemicals in the atmosphere like acids, salts and sulphur, which also may cause corrosion of metallic goods.

An object of the present invention is therefore to provide a telematic risk management system which is able to constantly monitor records and send data of various parameters of the shipment such as latitude and longitude, airspeed, altitude, inputs, moisture level, temperature, axis acceleration and inclination.

These data are used to investigate not only crashes, but other events. For example, a cargo may land hard and the data will determine if the cargo exceeded the maximal accepted landing load, if the moisture level exceeded the maximum value and if it requires an inspection, a visible report alerts handling personnel that the shipment is being monitored. Carriers will be interested in avoiding damage claims.

Data can be sent automatically as a warning or alarm, or at regular intervals.

Another object of the present invention is to provide a security system which in case of unauthorized movement or package burglary generates an alarm condition that is sent to the control center.

Still another object of the present invention is to provide a system to track the shipment of the products from suppliers to warehouse.

The features and the respective advantages of the telematic risk management system, of the present invention will become more clear from the following detailed description with reference to the annexed drawings in which:
- Fig. 1: is a schematic view of telematic risk management system according to a preferred embodiment of the present invention;
- Fig. 2: is a view of telematic risk management system of fig. 1 installed on pallets;
- Fig. 3: is a view of telematic risk management system operating in boarding phase;
- Fig. 4: is a view of telematic risk management system operating in broadcasting with other telematic risk management systems.

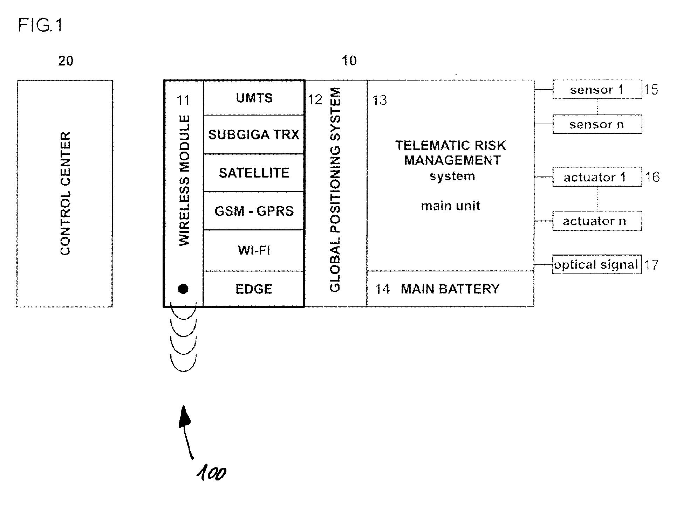

Referring now to fig. 1, a telematic risk management system 100 comprises at least one fixed control centre 20 and at least one telematic surveillance unit 10 which may communicate with the control center 20. The surveillance unit 10 has a wireless telecommunication module 11 for communicating with said at least one control centre 20. The communication may be unidirectional, if the surveillance unit 10 only sends collected and processed data to the control center 20, or may also be bi-directional, the control center 20 being operable to transmit data to be received and processed by the surveillance unit 10.

According to an advantageous embodiment, the surveillance unit further 10 comprises a global positioning system (GPS) 12, a telematic risk management system main unit 13, a power supply in the form of a main battery 14, at least one sensor 15, and at least one actuator 16. At least one indication unit may be provided for displaying a status signal 17 indicative of a status of the telematic surveillance unit 10. This status signal may for instance be an optical signal which has an alarm function and is activated in all cases in which the main unit 13 determines that a risk involving situation has occurred.

Such situations may comprise for instance the intrusion of water, the release of hazardous substances within the packed cargo, or the occurrence of excessive acceleration forces which may indicate a crash.

The wireless module 11 is a communication unit provided with a set of sub-modules each performing a given communication type characterized by the communication protocol supported, such as Universal Mobile Telecommunications System (UMTS), SUBGIGA transceivers (TRx), satellite, Global System for Mobile Communications/General Packet Radio Service (GSM/GPRS), WI-FI ®, EDGE ®.

The Global Positioning System (GPS) 12 is a space-based global navigation satellite system that provides location and time information in all weather and at all times and anywhere on or near the earth, provided there is an unobstructed line of sight to four or more GPS satellites.

The telematic risk management system main unit 13 in the preferred embodiment illustrated comprises an electronic board adapted to receive signals from a set of on board sensors 15, from sensor 1 to sensor n, where n represents the maximum number of said sensors, in order to reckon and register change of parameters, maltreatment, incorrect storage, handling misuse and any attempt at theft, thus serving as conventional antitheft.

The main battery 14 is a power supply for the surveillance unit 10. Apart from a battery in the form of e. g. a Lithium ion accumulator, the power supply may alternatively or additionally also comprise energy harvesting means for generating energy from the surroundings of the surveillance unit 10. The energy harvesting means may for instance use solar energy, vibration, thermal energy or any other known source of energy for providing power to the surveillance unit 10.

The sensor unit 15 is a measuring device that determines a physical or chemical quantity and converts it into an output signal which is input into and processed by the telematic risk management system main unit 13. Depending on the result of an evaluation of the sensor signals, the main unit 13 may generate an output signal that can be transmitted via the wireless module 11 to the fixed control center 20. Alternatively or additionally, the main unit 13 may control one or more actuators in response to the sensor signals.

The actuator unit 16 is a general device that accepts energy and produces movement as the action. As shown in figure 1, the actuator unit 16 may comprise a plurality of actuators 1 to n with different tasks.

The indication unit is operable to generate an optical signal 17 which is indicative of a defined status of the surveillance unit. The optical signal 17 may for instance comprise an alarm signal being indicative of the occurrence of risk events during the transportation process. Of course, also a display showing measured values for instance in the form of an LCD display can be part of the indication unit.

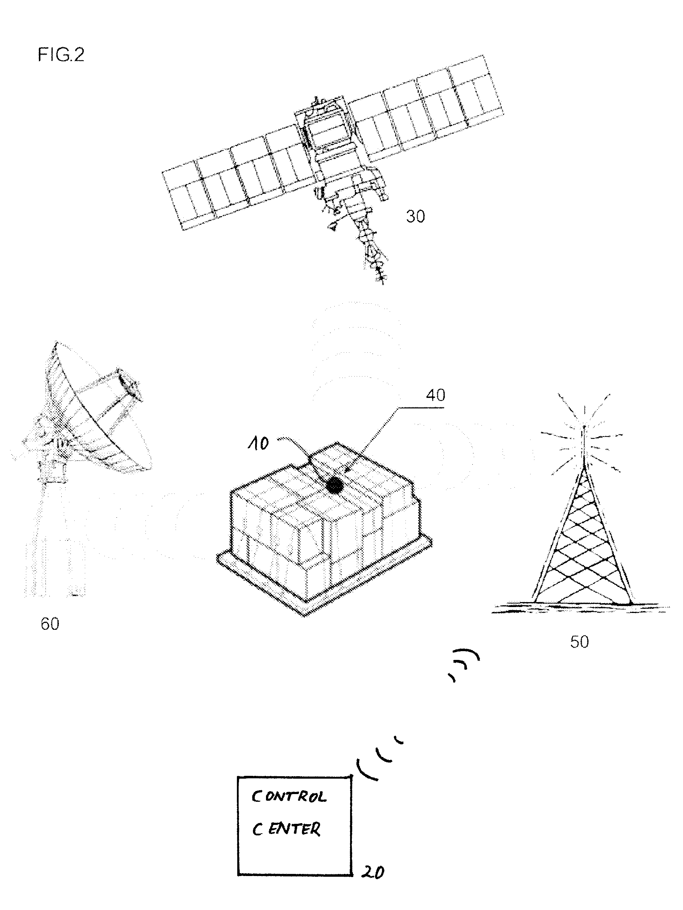

With reference now to fig. 2, the telematic surveillance unit 10 can be placed anywhere inside the packaging of a cargo 40, for example in the pallets, thus being safe from thief tampering. Furthermore, by being arranged within the pallet packaging which may comprise a moisture barrier bag as described above, the sensor unit 15 of the surveillance unit 10 has direct access to the atmosphere present on the inside of the protective cover.

Fig. 2 also shows a case in which this packaging is placed in an area where some communication network 50 is available and the surveillance unit 10 according to the present invention is able to locate position thereof, by GPS module of the module 12, and communicate it, together with state thereof, to a control centre 20. The control center 20 communicates with the surveillance unit 10 via the communication network 50.

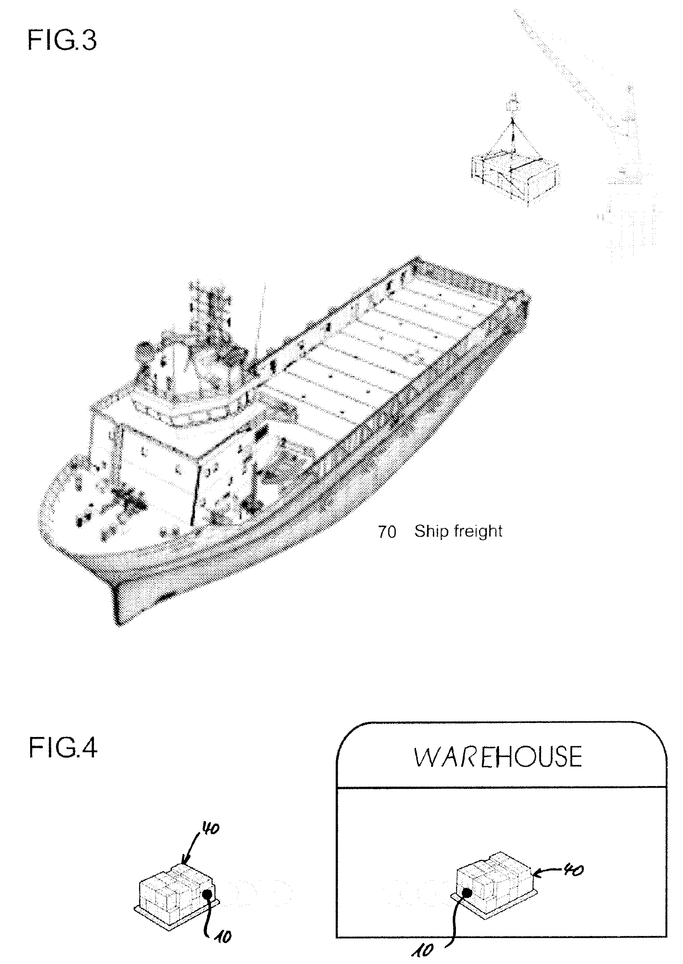

Fig. 3 shows a case in which the packaging in fig. 2 is going to be load in a ship freight Therefore, the telematic risk management system 10 can send to control centre 20 its position and its current state, that is loading state: any misuse or tilt, crash as well attempt of theft is readily communicated to the control centre 20 via a Wi-Fi connection.

As shown in fig. 4, the surveillance unit 10 is able to communicate directly with any other surveillance unit 10 belonging to the telematic risk management system 100 installed onto another shipment, to which in case of Global Positioning System (GPS) 12 antenna removal or inability to get a valid signal or position can receive valid data of Global Positioning System (GPS) from other telematic risk management system 10.

In summary, the system according to the present invention is design to monitor the packaging integrity, in particular, to check, during logistic processes and transports, that the integrity of the packaging is not affected and therefore to guarantee that there are not alterations of the undamaged conditions of the packaging (for example, informing if a packaging is broken or cut). As a side effect, the geographical position etc. may also be monitored.

## Claims

1. Telematic risk management system for shipment management, the system comprising:
(i) at least one fixed control centre (20),
(ii) at least one telematic surveillance unit (10) comprising a wireless communication module (11) for communicating with said at least one control centre (20).

2. Telematic risk management system (10) according to claim 1, wherein said wireless module (11) comprises a Global Positioning System module for using Global Positioning System data.

3. Telematic risk management system according to claim 1 or 2, wherein said wireless module (11) is operable to communicate via Universal Mobile Telecommunications System (UMTS), SUBGIGA transceivers (TRx), satellite, Global System for Mobile Communications/General Packet Radio Service (GSM/GPRS), WI-FI ®, or EDGE ®.

4. Telematic risk management system according to one of the preceding claims, wherein said telematic surveillance unit (10) comprises a main battery (14) operable as a power source.

5. Telematic risk management system according to one of the preceding claims, wherein said telematic surveillance unit (10) comprises at least one sensor (15).

6. Telematic risk management system according to one of the preceding claims, wherein said telematic surveillance unit (10) comprises at least one actuator (16).

7. Telematic risk management system according to one of the preceding claims, wherein said telematic surveillance unit (10) comprises at least one indication unit for displaying a status signal (17) indicative of a status of the telematic surveillance unit (10).

8. Telematic risk management system according to claim 7, wherein said indication unit is operable to generate a light signal.
